# EUROPÄISCHE PATENTSCHRIFT

(11) **EP 3 089 294 B1**
(45) Veröffentlichungstag und Bekanntmachung des Hinweises auf die Patenterteilung: **31.07.2019**
(21) Anmeldenummer: 15166052.9
(22) Anmeldetag: 30.04.2015
(51) Int. Cl.: H02G 1/12

(54) **KABELBEARBEITUNGSEINRICHTUNG UND VERFAHREN ZUM ENTFERNEN EINER SCHIRMFOLIE VON EINEM GESCHIRMTEN, MEHRADRIGEN RUNDKABEL**
CABLE PROCESSING DEVICE AND METHOD FOR REMOVING A SCREEN FILM FROM A SHIELDED, MULTI-CORE ROUND CABLE
DISPOSITIF D'USINAGE DE CÂBLE ET PROCÉDÉ DESTINÉ À ÉLIMINER UNE FEUILLE DE BLINDAGE D'UN CÂBLE ROND À PLUSIEURS FILS, BLINDÉ

(43) Veröffentlichungstag der Anmeldung: 02.11.2016
(73) Patentinhaber: Komax Holding AG, 6036 Dierikon (CH)
(72) Erfinder: Dober, Urs, CH-6403 Küssnacht (CH); Stocker, Martin, CH-6403 Küssnacht (CH)
(74) Vertreter: Inventio AG

(56) Entgegenhaltungen:
- EP-A1- 0 297 484
- EP-A1- 1 231 692
- DE-A1- 1 540 064
- GB-A- 2 063 580

## Beschreibung

Die Erfindung betrifft eine Kabelbearbeitungseinrichtung und ein Verfahren zum Entfernen einer Schirmfolie von einem geschirmten, mehradrigen Rundkabel.

EP 0 297 484 A1 zeigt eine Kabelbearbeitungseinrichtung zum Abisolieren eines geschirmten einadrigen Rundkabels mit vier Messern.

Mehradrige Rundkabel bestehen aus kreisförmig gebündelten und häufig vertwisteten Kabeladern. Die Kabeladern bestehen aus einem Leiter, beispielsweise Litzen oder Drähte aus elektrisch leitendem Material wie etwa Kupfer oder Aluminium, und einer den Leiter umhüllenden Isolation. Einrichtungen zum Abisolieren von mehradrigen Kabeln sind aus EP 1 231 692 A1, DE 15 40 064 A1 oder GB 2 063 580 A bekannt geworden.

Geschirmte, mehradrige Rundkabel werden beispielsweise als Signalkabel in Autos oder anderen Kraftfahrzeugen in grosser Zahl eingesetzt. Die Signalkabel müssen elektromagnetisch gut geschirmt sein, um eine hohe Datenübertragungsqualität sicherzustellen und damit von den Kabeln abgestrahlte elektromagnetische Wellen beispielsweise in der Bordelektronik der Fahrzeuge keine unerwünschten Störungen verursachen können. Zur Abschirmung des Rundkabels sind die Kabeladern von einem Schirmgeflecht aus einem metallischen, elektrisch leitenden Material umgeben. Für hohe Anforderungen an die Abschirmqualität weisen geschirmte Kabel zusätzlich eine Schirmfolie auf, die zwischen Kabeladern und Schirmgeflecht angeordnet ist und die gebündelten Kabeladern umgibt. Eine derartige Schirmfolie besteht häufig aus einer Kunststofffolie, beispielsweise aus PET, auf welche eine Aluminiumschicht aufgebracht wurde. Die Dicke gängiger Schirmfolien beträgt ca. 0.3 mm. Bekannt sind aber auch Schirmfolien, die vollständig aus einem Metall wie etwa Kupfer oder Aluminium bestehen. Diese Schirmfolien sind auch als Ganzmetallfolien bekannt. Zum Schutz des geschirmten, mehradrigen Rundkabels ist häufig eine Mantelisolierung aus PVC oder einem anderen elektrisch isolierenden elastischen Kunststoff als äussere Umhüllung um das Schirmgeflecht vorgesehen.

Im Hinblick auf die Konfektionierung von mehradrigen, geschirmten und eine Schirmfolie enthaltende Rundkabel kann es notwendig sein, dass zum Freilegen von Kabeladerenden die Schirmfolie entfernt werden muss. Bisher wurde die Schirmfolie in mühsamer Handarbeit von solchen Rundkabeln entfernt. Die manuelle Entfernung ist aufwendig, kostenintensiv und wenig effizient. Weiterhin besteht die Gefahr, dass die Isolation der Kabeladern beschädigt werden kann.

Es ist deshalb eine Aufgabe der vorliegenden Erfindung, eine Kabelbearbeitungseinrichtung zum Entfernen einer Schirmfolie von einem geschirmten, mehradrigen Rundkabel zu schaffen, die einfach und effizient betreibbar ist. Die Kabelbearbeitungseinrichtung soll derart ausgestaltet sein, dass beim Entfernen der Schirmfolie keine unerwünschten Beschädigungen der Isolationen der Kabeladern auftreten können.

Erfindungsgemäss werden diese Aufgaben mit einer Kabelbearbeitungseinrichtung mit den Merkmalen des Anspruchs 1 gelöst. Die Kabelbearbeitungseinrichtung zum Entfernen einer Schirmfolie von einem geschirmten, mehradrigen Rundkabel umfasst eine Mehrzahl von Messern zum Anschneiden der Schirmfolie und Führungselemente. Jeweils ein Messer ist einer Kabelader des Rundkabels zugeordnet. Dabei ist wenigstens ein Teil der Messer jeweils mit je einem der genannten Führungselementen versehen. Der vorerwähnte wenigstens eine Teil der Messer bezieht sich auf die Anzahl der vorhanden Messer. Wenn die Kabelbearbeitungseinrichtung also insgesamt eine Gesamtzahl von Messern zum Anschneiden der Schirmfolie aufweist und so eine Gruppe von Messern bildet, dann müsste wenigstens ein Messer aus der Gruppe von Messern (bzw. eine Teilmenge der Gesamtzahl der Messer) mit einem Führungselement versehen sein. Die Messer und insbesondere die mit den Führungselementen versehenen Messer sind zwischen einer Offenstellung und einer Schliessstellung radial gegen das Rundkabel bewegbar und können in der Schliessstellung die Schirmfolie anschneiden oder eventuell durchschneiden. Die Messer weisen jeweils konkav geformte Schneiden auf. Die Schneidenform ist vorteilhaft an die Kabeladern angepasst, wodurch die dünne Schirmfolie, die beispielsweise eine Foliendicke von 0.3 mm aufweisen kann, bereichsweise gleichmässig angeschnitten werden kann. Die Führungselemente weisen Führungsabschnitte auf, in die die von der Schirmfolie umhüllten Kabeladern in der Schliessstellung wenigstens bereichsweise aufnehmbar sind. Dabei können die Führungsabschnitte eine Anschlagfläche für die von der Schirmfolie umhüllten Kabeladern bilden, über die die von der Schirmfolie umhüllten Kabeladern in der Schliessstellung mit den Führungselementen in Kontakt kommen.

Dadurch, dass das Messer und das zugehörige Führungselement wenigstens in der Schliessstellung derart gegenüber dem Führungsabschnitt vorsteht, dass ein Überstand zum Festlegen einer maximalen Anschneidetiefe festlegbar ist, kann sichergestellt werden, dass im Hinblick auf die Entfernung der Schirmfolie nur die Schirmfolie durch Schneidprozesse geschwächt wird. Der erwähnte Überstand wird dabei in der Regel im Bereich eines Scheitelpunkts der konkav geformten Schneide gemessen. Eine Verletzung der Kabeladern kann praktisch ausgeschlossen werden. Die Kabelbearbeitungseinrichtung ist einfach und sicher betreibbar.

Der Überstand wird vorteilhaft an die Dicke der Schirmfolie angepasst. Für die meisten Anwendungsfälle sollte der Überstand höchstens die Foliendicke betragen. Für gängige Schirmfolien, bei denen die Foliendicke ca. 0.3 mm beträgt, kann das Messer wenigstens in der Schliessstellung um einen zwischen 0.05 und 0.3 mm liegenden Überstand gegenüber dem Führungsabschnitt des jeweiligen Führungselements vorstehen. Für bestimmte Anwendungszwecke, beispielsweise bei Schirmfolien mit einer hohen Elastizität, wären sogar auch leicht grössere Überstände als die Foliendicke denkbar.

Das Messer kann fest mit dem Führungselement verbunden sein, wodurch das Messer gegenüber dem Führungselement sowohl in der Schliessstellung als auch in der Offenstellung um den Überstand vorsteht. Es wäre aber auch denkbar, das Messer begrenzt verschiebbar auf dem Führungsetement zu lagern. In diesem Fall würde das Messer erst in der Schliessstellung vollständig vorstehen.

Insbesondere wenn das Rundkabel runde Kabeladern aufweist, kann es vorteilhaft sein, wenn der Führungsabschnitt des Führungselements eine kreiszylindrische konkave Anschlagfläche für die von der Schirmfolie umhüllte Kabeladern bildet. Damit die Kabelader oder zumindest das vergleichsweise weiche Material der Isolation der Kabelader beim Schliessvorgang komprimiert werden kann, kann es vorteilhaft sein, eine entsprechend angepasste Anschlagfläche zu wählen.

Das Führungselement kann ein aus einer Metallplatte gefertigtes Bauteil sein. Ein plattenförmiges Führungselement (nachfolgend auch als "Führungsplatte" bezeichnet) lässt sich einfach in der Kabelbearbeitungsvorrichtung einbauen; indem beispielsweise die Führungsplatte zusammen mit dem zugehörigen Messer an einem Messerhalter befestig wird. Zur Herstellung von Führungsplatten können beispielsweise Stahlbleche verwendet werden.

Auch die Messer können plattenförmig ausgestaltet sein. Wenn Führungselemente und Messer jeweils plattenförmig ausgestaltet sind, können kompakte Schneideinheiten mit einem mehrlagigen Schichtaufbau geschaffen werden.

Vorteilhaft kann es sein, wenn jedes Messer ein Führungselement aufweist. Damit kann gewährleistet werden, dass die Schirmfolie immer innerhalb eines zulässigen Werts angeschnitten und so die Isolation der Kabeladern nicht verletzt wird.

Alternativ kann es aber auch vorteilhaft sein, wenn nur ein Teil der Messer Führungselemente aufweist und die restlichen Messer frei liegende Schneiden aufweisen. Die letztgenannten restlichen Messer weisen somit keine Führungselemente auf. Stattdessen können diese Messer mit einer Distanzplatte oder einem anderen Distanzelement bestückt sein. Mit einem solchen Distanzelement lässt sich die Distanz des Messers zu beispielsweise einem Messerhalter der Kabelbearbeitungseinrichtung einfach vorgeben. Wenn das Distanzelement eine Distanzplatte ist, verfügt die Distanzplatte mit der Dicke D2 vorteilhaft über die gleichen Plattendicke wie die Führungsplatte mit der Dicke D1 (d.h. D1 = D2), wodurch sichergestellt ist, dass die Schirmfolie in gleicher axialer Position in Bezug auf die Längsachse des Kabels angeschnitten wird.

Die Messer können jeweils wie folgt ausgestaltet sein: Das Messer kann bezogen auf eine Draufsicht ein keilförmiges vorderes, dem Rundkabel zugewandtes Ende aufweisen. Dabei kann die Schneide im Bereich der Keilspitze des in der Draufsicht eine Keilform aufweisenden Messers angeordnet sein. Ersichtlicherweise wird gemäss dieser Ausgestaltung die Keilspitze in der Draufsicht durch die konkav geformte Schneide gebildet; eine singuläre Spitze ist somit an sich gar nicht vorhanden. Durch die Keilform können die Messer einfach sternförmig um die durch das Kabel vorgegebene Maschinenachse angeordnet werden.

Das Messer kann eine Schneide aufweisen, an die ein Nutabschnitt anschliesst. Der Nutabschnitt kann zum Erzeugen einer vorteilhaften Schneidgeometrie in radialer Richtung bzw. in durch die Bewegung der Messer vorgegebene Schneidrichtung verlaufender Nutabschnitt sein. Das Messer kann zum Bilden eines Schneidekeils eine Anphasung aufweisen, wobei der Nutabschnitt bevorzugt in der Anphasung angeordnet ist.

An den Seiten der Schneide können spitzwinklig zulaufende Erhebungen oder Spitzen zum Perforieren der Schirmfolie angeordnet sein. Die seitliche Anordnung der Spitzen zum Perforieren der Schirmfolie bezieht sich dabei auf die schon vorgängig erwähnte Draufsicht, bei der die Blickrichtung in Kabellängsrichtung (bzw. entlang einer x-Achse) ist. Ein eine derartige Schneide aufweisendes Messer kann also die Schirmfolie lokal perforieren, beispielsweise wenn die Schirmfolie im Übergangsbereich zwischen zwei Kabeladern nicht flächig an den Kabeladern anliegt und unter Umständen frei gespannt ist. Zwischen diesen Perforationsspitzen kann dank der Führungselemente nach wie vor sichergestellt werden, dass die Schirmfolie nur angeschnitten wird.

Wenn das zu bearbeitende Kabel ein geschirmtes, vieradriges Rundkabel mit vier Kabeladern ist, kann es vorteilhaft sein, wenn vier Messer zum Anschneiden der Schirmfolie vorgesehen sind. Je ein Messer ist dabei je einer Kabelader zugeordnet. Die vier Messer können paarweise zusammengefasst sein und jeweils gegeneinander bewegbar sein. Die zwei Messerpaare können in der Draufsicht eine Kreuzanordnung mit rechtwinklig zueinander ausgerichteten Messern sein.

Die Kabelbearbeitungseinrichtung kann einen Messerkopf mit Messerhaltern zum Halten der Messer aufweisen, wobei für jedes Messer vorteilhaft jeweils ein Messerhalter vorgesehen sein kann.

Besonders vorteilhaft sind die Messer derart an den Messerhaltern befestigbar oder befestigt, dass zwischen den Messern und den Messerhaltern die Führungselemente oder gegebenenfalls die Distanzplatten angeordnet sind. Die Führungselemente bzw. die Distanzplatten können damit sandwichartig zwischen den Messerhaltern und den Messern aufgenommen sein.

Weiter kann es vorteilhaft sein, wenn der Messerkopf zwei einander gegenüberliegende Messerhalter aufweist, die zum Beispiel mit pneumatisch und/oder motorisch antreibbaren Abzugsbacken zum Abziehen der angeschnittenen Schirmfolie ausgerüstet sind. Die Abzugsbacken können gegen das Rundkabel verfahren werden und das Kabelende des Rundkabels im Bereich der angeschnittenen Schirmfolie klemmend festhalten. Durch - in Bezug auf das Rundkabel - axiale Bewegung der Abzugsbacken kann die angeschnittene Schirmfolie vollständig von der Restschirmfolie, die am Rundkabel verbleibt, abgelöst werden.

Das mit Hilfe der Abzugsbacken vom Rundkabel abgelöste Schirmfolienstück muss unter Umständen aus der Kabelbearbeitungseinrichtung herausgebracht werden. Hierzu kann die Kabelbearbeitungseinrichtung ein Absaugrohr zum Absaugen der abgezogenen Schirmfolie aufweisen.

Ein weiterer Aspekt der Erfindung betrifft ein Verfahren zum Entfernen einer Schirmfolie von einem geschirmten, mehradrigen Rundkabel. Das Verfahren wird dabei unter Verwendung der vorgängig beschriebenen Kabelbearbeitungseinrichtung durchgeführt. Das Verfahren zeichnet sich dadurch aus, dass die Messer radial gegen das Rundkabel bewegt werden, so dass in einer Schliessstellung die Schirmfolie von den Messern angeschnitten oder durchschnitten wird. Dadurch, dass wenigstens eines der Messer um einen Überstand gegenüber einem Führungsabschnitt eines Führungselements vorsteht, kann eine maximale Schneidetiefe festgelegt werden. Das Verfahren lässt sich einfach automatisieren und mit einer entsprechenden Kabelbearbeitungseinrichtung durchführen.

Weitere Einzelmerkmale und Vorteile der Erfindung ergeben sich aus der nachfolgenden Beschreibung von Ausführungsbeispielen und aus den Zeichnungen. Es zeigen:
- Fig. 1: eine perspektivische Darstellung eines geschirmten, vieradrigen Rundkabels,
- Fig. 2: eine perspektivische Darstellung einer Anordnung mit vier Messern in einer Offenstellung für eine Kabelbearbeitungseinrichtung zum Entfernen der Schirmfolie des geschirmten, vieradrigen Rundkabels gemäss Fig. 1,
- Fig. 3: die Anordnung aus Fig. 2 in einer Schliessstellung,
- Fig. 4: eine alternative Anordnung mit vier Messern in einer Offenstellung,
- Fig. 5: die Anordnung gemäss Fig. 4 in der Schliessstellung,
- Fig. 6: eine perspektivische Ansicht auf ein Messerpaar des Ausführungsbeispiels gemäss Fig. 3 von vorne,
- Fig. 7: das Messerpaar aus Fig. 6 in einer stark vergrösserten Rückansicht,
- Fig. 8: eine stark vergrösserte Querschnittsdarstellung durch die Messer in der Schliessstellung,
- Fig. 9: eine Kabelbearbeitungseinrichtung zum Entfernen einer Schirmfolie von einem geschirmten, vieradrigen Kabel mit einer Messeranordnung in der Art von Fig. 4,
- Fig. 10: einen Teil des Messerkopfs der Kabelbearbeitungseinrichtung gemäss Fig. 9 in leicht vergrösserter perspektivischer Darstellung,
- Fig. 11: einen Längsschnitt durch zwei Schneideinheiten nach Beendigung des Anschneidevorgangs und mit Abzugsbacken in einer Ruhestellung, und
- Fig. 12: die Abzugsbacken der beiden Schneideinheiten aus Fig. 11 in einer Schliessstellung.

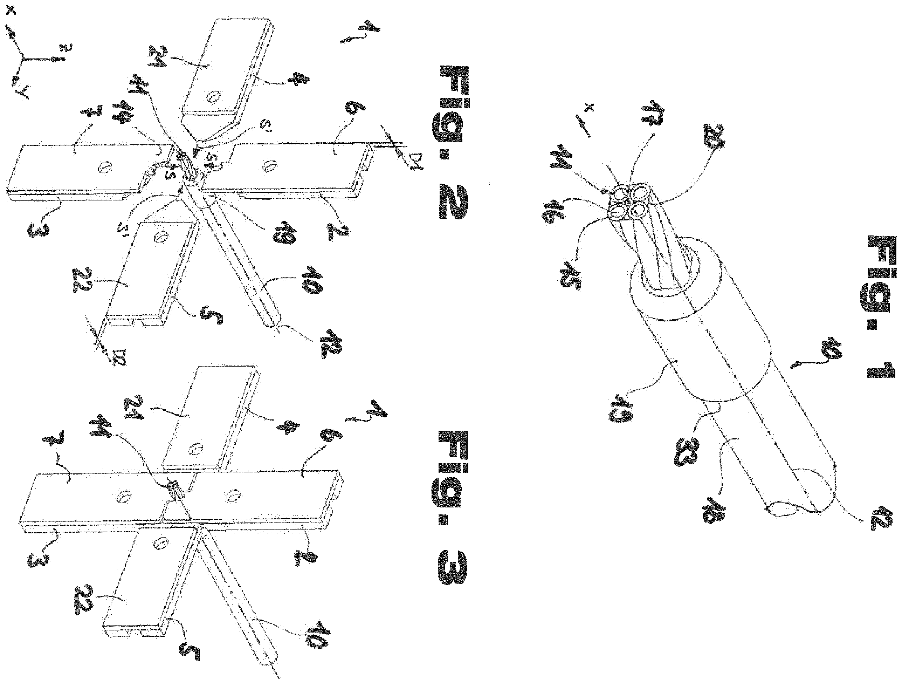

Fig. 1 zeigt das Kabelende eines geschirmten, vieradrigen Rundkabels 10. Die vier Kabeladern des geschirmten Rundkabels 10 sind mit 11 bezeichnet, wobei jede Kabelader jeweils einen Leiter 16 und eine den Leiter umhüllende Isolierung 15 aufweist. Die Leiter 16 sind üblicherweise Litzen oder Drähte aus elektrisch leitendem, metallischen Material wie etwa Kupfer oder Aluminium. Die Kabeladern 11 sind kreisförmig gebündelt und vertwistet um einen im Querschnitt kreisförmigen Füller 17 aus einem Isolationsmaterial angeordnet. Der Füller 17 kann auch aus Textilfasern bestehen. Zusätzlich kann das Rundkabel 10 im Zentrum einen Metalldraht aufweisen. Das Rundkabel 10 ist nach aussen hin durch eine Mantelisolierung 18 aus PVC oder einem anderen elektrisch isolierenden, elastischen Kunststoff gegen Witterungseinflüsse und andere äussere Einflüsse geschützt. Zur elektrischen Abschirmung weist das Rundkabel 10 ein Schirmgeflecht 19 aus einem elektrisch leitfähigen Material und eine Schirmfolie 20 auf. Die Schirmfolie 20 besteht beispielhaft aus einer Kunststofffolie, beispielsweise aus PET, auf welche eine Aluminiumschicht aufgebracht ist. Es können aber auch aus Kupfer oder Aluminium bestehende Ganzmetallfolien als Schirmfolien 20, eingesetzt werden. Solche Kabel 10 finden zum Beispiel als Signalkabel in Autos oder anderen Kraftfahrzeugen Anwendung. Die Dicke gängiger Schirmfolien beträgt ca. 0.3 mm. Selbstverständlich können je nach Anwendungsgebiet und Anforderungen an die Abschirmung auch andere Schirmfolien und insbesondere auch solche mit anderen Foliendicken von der nachfolgend beschriebenen, erfindungsgemässen Kabelbearbeitungseinrichtung verarbeitet werden.

Für eine vorliegend nicht näher beschriebene Konfektionierung des geschirmten Rundkabels 10, bei welcher die Aderenden beispielsweise mit Crimpverbindungen bestückt werden, ist es notwendig, die Schirmfolie 20 endseitig zu entfernen. Damit die Schirmfolie 20 entfernt werden kann, muss die Schirmfolie zunächst freigelegt werden. Hierzu wird das vordere Stück der Kabelisolation 18 entfernt und das Schirmgeflecht umgelegt. Ein derart bereitgestelltes Rundkabel 10 für das nachfolgend im Detail beschriebene Verfahren zum Entfernen der Schirmfolie 20 ist in Fig. 1 dargestellt. Der nach dem Umstülpen nach hinten gewandte vordere Rand des umgelegten Schirmgeflechts 19 ist mit 33 bezeichnet. Anstelle des Umstülpens könnte das Schirmgeflecht 19 aber auch durch Schneiden abgetrennt und so das Kabelende freigelegt werden. Das Rundkabel 10 erstreckt sich in durch den Pfeil x angedeutete axiale Richtung, die Kabellängsachse ist mit 12 bezeichnet. Zum besseren Verständnis und Orientierung ist in den nachfolgenden Figuren wenigstens teilweise ein kartesisches Koordinatensystem eingezeichnet. In den betreffenden Figuren verläuft die Kabellängsachse des Rundkabels 10 dabei immer in Richtung der x-Achse. In den nachfolgenden Figuren 2 bis 12 wird aufgezeigt, wie die Schirmfolie vom Kabel entfernt werden kann.

Fig. 2 zeigt eine Anordnung mit vier Messern 2, 3, 4, 5 für eine Kabelbearbeitungseinrichtung 1 zum Entfernen der Schirmfolie vom geschirmten, vieradrigen Rundkabel 10. Das geschirmte Rundkabel 10 wird beispielsweise mittels eines (nicht dargestellten) Kabelgreifers in Richtung der x-Achse bis zu gewünschten Längsposition ausgezogen und durch Drehen des Kabelgreifers in die richtige Winkellage gebracht, um die Kabeladern 11 in Bezug auf die Messer 2, 3, 4, 5 auszurichten. Ein Messer 2, 3, 4, 5 ist jeweils einer Kabelader 11 des Rundkabels 10 zugeordnet; die Messer 2, 3, 4, 5 sind in der Schnittposition x auf die jeweiligen Kabeladern 11 gerichtet und können die Schirmfolien bei den jeweiligen Kabeladern 11 bei einem Schliessvorgang schneiden oder anschneiden. An den einander gegenüberliegenden Messern 2 und 3, die zum Anschneiden der Schirmfolie gegen das Rundkabel 10 in radialer Richtung bewegbar sind, sind Führungsplatten 6 und 7 angebracht. Die Bewegungsrichtung der Messer 2, 3 zum Erstellen der Schliessstellung ist mit Pfeilen s angedeutet. In rechtwinkliger Richtung zu den Messern 2, 3 verlaufen die beiden Messer 4, 5. Die Schliessbewegung betreffend Messer 4, 5 ist mit Pfeilen s' angedeutet. Somit ergibt sich eine sternförmige Konfiguration. Im vorliegenden Ausführungsbeispiel sind die vier Messer 2, 3, 4, 5 ersichtlicherweise in einer Kreuzanordnung angeordnet. Die Messer 4, 5 sind jeweils mit Distanzplatten 21, 22 versehen. Die plattenförmigen Elemente 6, 7 auf der einen Seite sowie die plattenförmigen Elemente 21, 22 auf der anderen Seite sind weisen dieselbe Dicke auf, wodurch sichergestellt werden kann, dass die Lage der Schnitte für alle Messer die gleiche x-Position aufweisen.

Die einzelnen Messer 2, 3, 4, 5 können ausgehend von der Offenstellung gemäss Fig. 2 simultan gegen das Rundkabel 10 bewegt werden. Aber auch eine zweistufige Betriebsweise könnte vorteilhaft sein. So könnten beispielsweise zuerst die Messer 2, 3 zusammen mit den zugehörigen Führungsplatten 6, 7 in s-Richtung bewegt werden und die Schirmfolie im Bereich der jeweiligen Kabeladern 11 dabei anschneiden. Danach werden die beiden übrigen Messer 4, 5 in s'-Richtung bewegt, um die verbleibenden Kabeladern 11 anzuschneiden.

Die Distanzplatten 21, 22 sorgen dafür, dass die Schirmfolie in gleicher axialer Position in Bezug auf die Längsachse x des Rundkabels 10 angeschnitten wird. Darum sind die Plattendicken der Distanzplatten 21, 22 (Dicke D2) und der Führungsplatten 6, 7 (Dicke D1) gleich gross (d.h. D1 = D2).

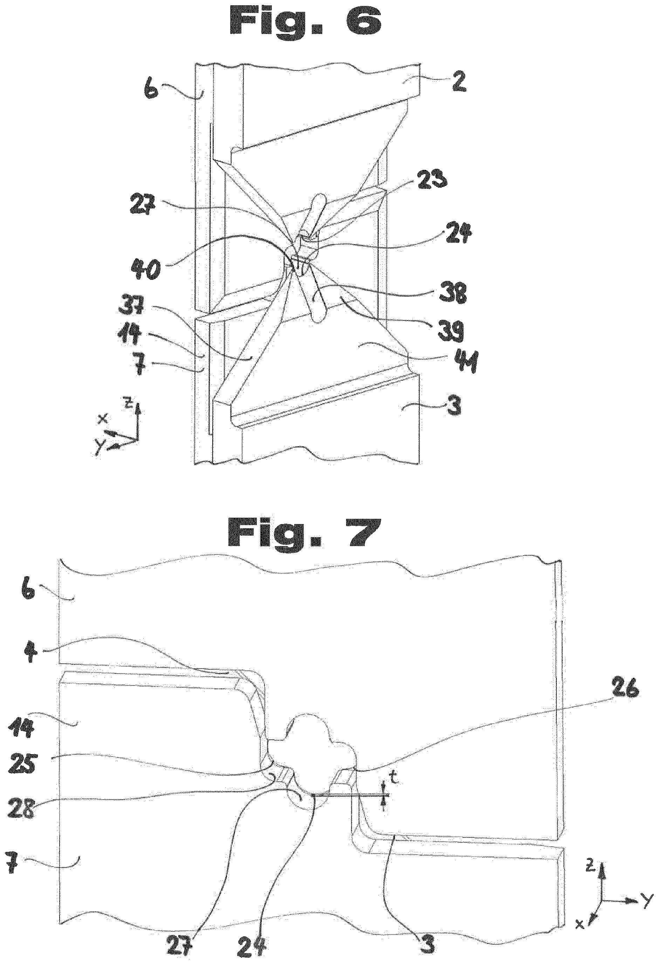

In Fig. 3 befinden sich die Messer 2, 3, 4, 5 mit den jeweiligen Führungsplatten 6, 7 bzw. Distanzplatten 21, 22 in einer Schliessstellung. Die Distanzplatte 6 kann beispielsweise über eine Schraubverbindung fest mit dem Messer 2 verbunden sein. Ebenso kann die Distanzplatte 7 fest mit dem Messer 3 verbunden sein. Anstatt der festen Verbindung zwischen Messern und Führungsplatten bzw. Distanzplatten könnten die jeweiligen Komponenten auch um einen Überstand (t) begrenzt verschieblich gelagert sein (betreffend Überstand t vgl. nachfolgende Fig. 7). Ebenfalls eine feste Verbindung liegt zwischen der Distanzplatte 21 und dem Messer 4 sowie der Distanzplatte 22 und dem Messer 5 vor.

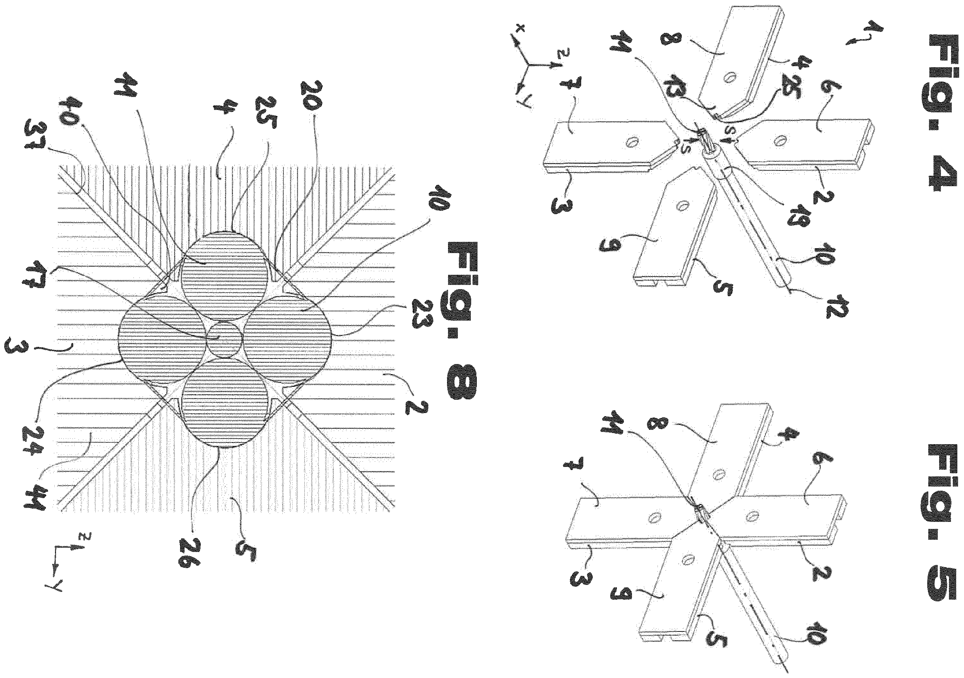

Im zweiten Ausführungsbeispiel für eine Anordnung für eine Kabelbearbeitungseinrichtung zum Entfernen einer Schirmfolie vom geschirmten, vieradrigen Rundkabel 10, das in den Figuren 4 und 5 gezeigt ist, sind die an den Messern 2, 3, 4, 5 befestigten plattenförmigen Bauteile 6, 7, 8, 9 gleichartig ausgebildet. Jedes der Messer 2, 3, 4, 5 ist mit einer Führungsplatte 6, 7, 8, 9 versehen. Die Führungsplatten 6, 7, 8, 9 weisen in Bezug auf die Draufsicht (Blickrichtung entlang der x-Achse) keilförmige, dem Rundkabel 10 zugewandte vordere Enden 13 auf (Fig. 4). Die keilförmigen Enden 13 ergeben die Form eines gleichschenkligen Dreiecks, wobei der Keil einen 45°-Winkel einschliesst. Im Bereich der Keilspitze ist ein durch eine konkave Fläche gebildeter Führungsabschnitt 25 angeordnet. Dieser Führungsabschnitt 25 bildet eine Anschlagfläche für die von der Schirmfolie umhüllte Kabelader.

In der in Fig. 5 gezeigten Schliessstellung kontaktieren die jeweiligen Führungselemente 6, 7, 8, 9 die ihnen zugeordneten von der Schirmfolie umhüllten Kabeladern 11. Für Kabeladern 11 mit rundem Querschnitt ist die konkave Anschlagfläche des Führungsabschnitts 25 im Wesentlichen kreiszylindrisch ausgebildet. In der Schliessstellung liegen die Führungsabschnitte 25 flächig an den Kabeladern 11 auf und können diese beim Schliessvorgang komprimieren. Durch Ansteuern der (hier nicht dargestellten) Antriebsmittel zum Bewegen der Messer mit den Führungsplatten können die Kabeladern in einem wählbaren Grad komprimiert werden.

Die Messer 2, 3, 4, 5 sind vorliegend als Messerplatten ausgestaltet und können beispielsweise aus einer zum Schneiden geeigneten Stahllegierung hergestellt werden. Denkbar wären aber auch keramische Materialien. Die ebenfalls plattenförmigen Führungsplatten 6, 7, 8, 9 sind in Bezug auf die Aussenkontur ähnlich wie die Messer geformt, wodurch sich kompakte Schneideinheiten mit einem mehrlagigen Schichtaufbau geschaffen werden. Die Führungsplatte 6, 7, 8, 9 ist ein Bauteil, das einfach aus einer Metallplatte (z.B. aus Stahl) gefertigt werden kann. Die Messer 2, 3, 4, 5und zugehörigen Führungsplatten 6, 7, 8, 9 bilden jeweils vier Schneideinheiten. Die Messer 2, 3, 4, 5 sind dabei mit zugehörigen Führungsplatten 6, 7, 8, 9 über Schraub- oder andere Befestigungsmittel fest miteinander verbunden.

In Fig. 6 ist eine Detailansicht zweier einander gegenüberliegenden Schneideinheiten mit einem entlang der z-Achse gegenläufig bewegbaren, die Messer 2 und 3 umfassenden Messerpaar dargestellt. Das obere Messer 2 und das gegenüberliegende untere Messer 3 sind gleich ausgestaltet, Die an den Messern 2, 3 befestigten Führungsplatten 6, 7 weisen vordere Enden 14 auf, die abgestuft sind. Die Stufen der einander zugewandten Enden 14 der Führungsplatten 6 und 7 sind komplementär zueinander ausgestaltet, so dass sie in der Schliessstellung bis auf einen kleinen Spaltraum nahezu formschlüssig ineinander aufnehmbar sind (vgl. nachfolgende Fig. 7). Die Messer 2, 3 zum Anschneiden der (hier nicht dargestellten) Schirmfolie des Rundkabels weisen konkav geformte Schneiden auf. Die mit 24 bezeichnete Schneide des unteren Messers 3 ist einer (nicht dargestellten) unteren Kabelader zugeordnet. Die Schneide des oberen Messers 2 zum Anschneiden der in der Schnittposition x oberen Kabelader ist mit 23 bezeichnet. Die Schneiden 23, 24 jedes Messers 2, 3 sind in der Draufsicht (Blickrichtung in x-Richtung) kreisförmig ausgestaltet und an die Kabeladern angepasst. Betreffend Details zur Schneidengeometrie wird auf die nachfolgende Fig. 8 verwiesen.

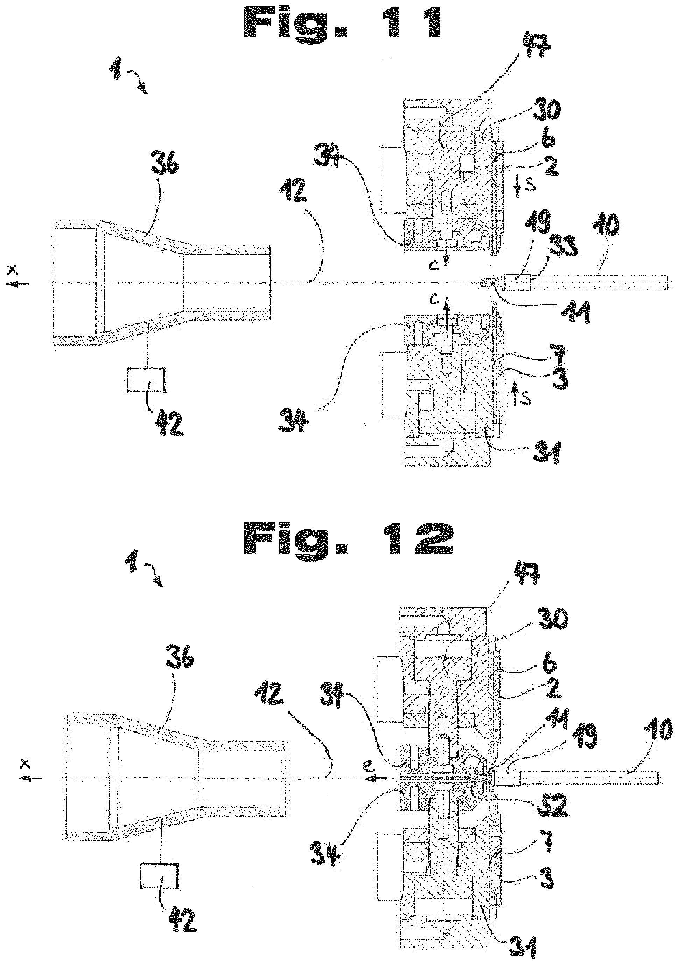

Wie aus Fig. 6 erkennbar ist, weisen die Messer 2, 3 ein keilförmiges vorderes Ende 41 auf. Die bogenförmige Schneide 24 definiert die Spitze des Keils des vorderen Endes 41 des keilförmigen Messers 3. Das Messer 3 weist eine um einen Schneidewinkel von ca. 30° gegenüber einer planparallel zur y-z-Ebene liegenden Messerunterseite geneigte Anphasung 39 auf (vgl. Querschnittsdarstellungen gemäss nachfolgenden Fig. 11, 12). In der Anphasung ist ein kanalartig und in radialer Richtung verlaufender Nutabschnitt 38 angeordnet, der die bogenförmige Schneidkante 24 bildet.

Die in Fig. 6 gezeigte Ausgestaltung der vorderen Enden 41 der Messer entspricht im Übrigen auch den Messern, wie sie für das zweite Ausführungsbeispiel gemäss den Fig. 4 und 5 eingesetzt wird. Im ersten Ausführungsbeispiel weisen sowohl die Messer 2, 3 als auch die Führungsplatten 6, 7keilförmige vordere Enden auf.

Aus der in Fig. 7 gezeigten Rückansicht des Messerpaars ist ersichtlich, dass die einzelnen Schneideinheiten so ausgestaltet sind, dass jeweils nur eine schmale Schneide 24 eines Messers 3 über die Kontur der zugehörigen Führungsplatte 7 heraussteht. Das untere Messer 3 mit der Schneide 24 steht im Bereich des Scheitels der Kontur gegenüber dem Führungsabschnitt 27 der Führungsplatte 7 um einen Überstand t vor. Dieser Überstand t kann abhängig vom Isolationsmaterial des Innenleiters und dem Material und der Dicke der Schirmfolie gewählt oder eingestellt werden, dass die Schirmfolie geschnitten oder geritzt bzw. angeschnitten werden kann, ohne dass eine bleibende Beschädigung des Isolationsmaterials auftritt. Dieser Überstand t beträgt für gängige geschirmte, vieradrige Rundkabel zwischen 0.05 mm und 0.3 mm (bis maximale Dicke der Schirmfolie). Je nach Schirmfolie wären aber auch andere Masse für den Überstand t denkbar.

In Fig. 7 sind weiterhin die Schneiden der in horizontaler Richtung bzw. entlang der y-Achse bewegbaren Messer gezeigt und dank der starken Vergrösserung erkennbar. Die Schneide 25 des Messers 4 steht gegenüber einem zweiten, auf der Führungsplatte 7 befindlichen Führungsabschnitt 28 vor. Dieser Führungsabschnitt 28 und die Schneide 25 sind einer benachbarten Kabelader zugeordnet. Die dritte Schneide 26 des dem Messer 4 gegenüberliegenden Messers ist in Fig. 7 ebenfalls erkennbar.

Die Führungsabschnitte 27 der Führungsplatten 6, 7 sind so geformt, dass die Führungsplatten 6, 7 das Rundkabel beim Schliessen durch Eingreifen in die Kabeladern bei nicht ganz exakter Winkellage leicht verdrehen und damit wenigstens geringfügige Fehllagen des Kabels ausgleichen können. Aufgrund ihrer Form können die Führungsplatten 6, 7 die Schirmfolie näher an die Kabeladern drücken und vorspannen, indem die Schirmfolie in den Leerraum zwischen den Kabeladern gezogen wird.

Fig. 8 zeigt einen Querschnitt durch die Anordnung mit den vier Messern 6, 7, 8, 9 gemäss Fig. 3 oder 5 in der Schliessstellung. Die Adern 10 des Rundkabels sind im Querschnitt vereinfacht als Kreisscheiben dargestellt, selbstverständlich verfügen auch diese Adern 11 über Leiter und Isolierung. Jeder Kabelader 11 ist eine Schneide eines Messers zugeordnet. Alle Messer 2, 3, 4, 5 weisen eine identische Formgebung und Schneidengeometrie auf, weshalb nachfolgend beispielhaft für alle vier Messer auf das untere Messer 3 Bezug genommen wird. Die Schneide 24 des unteren Messers 3 weist im Querschnitt eine etwa kreisförmige Form auf. Die Schneidenform der Schneide 24 ist an die untere Kabelader 11 angepasst. In der Schliessstellung, in der die Schirmfolie 20 angeschnitten wird, liegt die Schneide 24 bis auf einen Restwert, der der Differenz der Foliendicke zum Überstand entspricht, auf der Kabelader 11 auf. Seitlich der Schneide 24 sind Spitzen 40 bei den Seitenkanten 37 angeordnet, die sich durch die Keilform der vorderen Enden 41 der Messer 3 ergeben. Wenn, wie in Fig. 8 beispielhaft gezeigt, die Schirmfolie im Übergangsbereich zwischen den Kabeladern frei liegt, dann perforieren die Spitzen 24 die Schirmfolie 20 im Schliessvorgang.

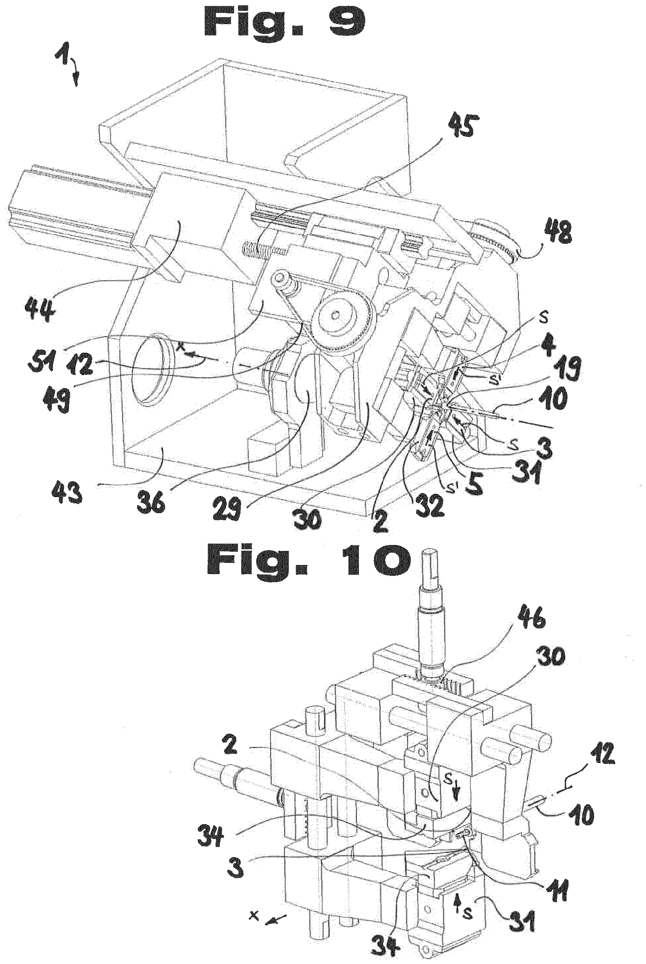

Konstruktive Details zur Ausgestaltung einer Kabelbearbeitungseinrichtung zum Entfernen einer Schirmfolie von einem geschirmten, vieradrigen Rundkabel sind aus den Fig. 9 und 10 entnehmbar. Fig. 9 zeigt eine Kabelbearbeitungseinrichtung 1 mit einer Messeranordnung in der Art vom zweiten Ausführungsbeispiel gemäss der Figuren 4 und 5. Die Kabelbearbeitungseinrichtung 1 umfasst eine Konsole 43 zum Tragen der Maschinenkomponenten. Die Messer 2, 3, 4, 5 sowie die zugehörigen Führungsplatten sind über Messerhalter an einem Messerkopf 29 angeordnet. Der Messerkopf ist über eine Servoachse 44 mit einem eine Spindel 45 umfassenden Spindelantrieb entlang der Kabellängsachse 12 bzw. in x-Richtung hin und her verschiebbar. Anstelle des Spindelantriebs wären selbstverständlich auch andere Antriebslösungen zum Bewegen des ganzen Messerkopfs 29 denkbar. Zum Bewegen der Messer 2, 3 sowie 4, 5 in radialer Richtung gegen das geschirmte Rundkabel 10 sind weitere Antriebe vorgesehen. Die Messer 4, 5 lassen sich beispielsweise bei Aktivierung eines über Riemen 49 eines Motors 51 eines zweiten Antriebs mit dem Messerpaar 4, 5 über ein Getriebe betreiben. Die entsprechende Schliessbewegung ist mit Pfeilen s' angedeutet. Zum Bewegen der Messer 2, 3 dient ein dritter Antrieb, der über Riemen 48 die Bewegung der Messer 2, 3 in Richtung der Pfeile s bewirkt. Nicht dargestellt ist ein Kabelgreifer, der Teil eines Handarbeitsplatzes oder einer Kabelverarbeitungsanlage sein kann und das geschirmte, mehradrige Rundkabel 10 während der Bearbeitung hält.

In Fig. 10 ist ein Teil des Messerkopfs der Kabelbearbeitungseinrichtung 1 aus Fig. 9 dargestellt. Dieser Teil des Messerkopfs weist das Messerpaar mit den Messern 2 und 3 auf, die gegenläufig in Schliessrichtung s zum Erstellen der Schliessstellung zum Anschneiden der um die Kabeladern 11 gelegten Schirmfolie dient. Mit 46 ist ein Zahnstangengetriebe bezeichnet, das mittels angetriebener Riemen 48 für die Bewegung der beiden einander gegenüberliegenden Schneideinheiten mit den Messern 2, 3 sorgt. Jedes Messer 2, 3 sowie die zugehörigen Führungsplatten ist jeweils von einem Messerhalter 30, 31 gehalten. Die Messerhalter 30, 31 können über das Zahnstangengetriebe 46 gemeinsam in radialer Richtung gegen die Kabellängsachse 12 bewegt werden. Jeder Messerhalter 30, 31 weist weiterhin jeweils ein Abzugsbacken 34 zum Abziehen der angeschnittenen Schirmfolie auf.

In Fig. 11 befinden sich die Messerhalter 30 und 31 in Bezug auf die radiale Lage in der Offenstellung. In Bezug auf die axiale Lage befinden sich die Messerhalter 30, 31 in einer etwas vorgeschobenen Position, in der die angeschnittene Schirmfolie des geschirmten Rundkabels 10 abgezogen werden kann. Zum Abziehen der Schirmfolie müssen die Abzugsbacken 34 zur Kabellängsachse hin bewegt und in klemmenden Kontakt mit der Schirmfolie gebracht werden. Die Abzugsbacken 34 sind mit einem Pneumatikzylinder 47 verbunden und lassen sich pneumatisch aus den Messerhaltern 30, 31 ausfahren. Die pneumatisch bewirkte Ausfahrbewegung der Abzugsbacken ist mit Pfeilen c angedeutet. Wegen der vergleichsweise geringen Hubhöhe des pneumatischen Antriebs zum Bewegen der Abzugsbacken 34 ist es in der Regel notwendig, die Messerhalter 30, 31 gesamthaft gegen die Kabellängsachse 12 zu bewegen. Letztgenannte Bewegung ist in Fig. 11 mit den Pfeilen s angedeutet.

In Fig. 12 befinden sich die Abzugsbacken 34 in einer Schliessstellung, in der sie die Kabeladern 11 klemmend erfassen. Durch Bewegen der Anordnung mit den Messerhaltern 30, 31 und den Abzugsbacken 34 in Richtung des Pfeils e bei feststehendem Rundkabel 10 kann die angeschnittene Schirmfolie schliesslich abgezogen werden. Alternativ oder allenfalls sogar zusätzlich wäre es aber auch denkbar, das Rundkabel 10 in Gegenrichtung zum Pfeil e beispielsweise mittels eines (nicht dargestellten) Kabelgreifers zu bewegen.

In Fig. 11 ist weiterhin ein Absaugrohr 36 gezeigt. Das Absaugrohr 36 dient dazu, das nach dem Anschneiden mittels der einen Abzugsgreifer bildenden Abzugsbacken 34 abgezogene Folienstück der Schirmfolie aus der Maschine zu entfernen. Eine Vakuumquelle 42 dient zum Erzeugen eines Absaugstroms.

Das Verfahren zum Entfernen der Schirmfolie von einem geschirmten, mehradrigen Rundkabel 10 ist nachfolgend im Detail beschrieben. Das geschirmte, mehradrige Rundkabel muss in vorgelagerten, hier nicht erläuterten, jedoch dem Fachmann an sich bekannten Schritten bereits soweit vorbereitet sein, dass die Mantelisolierung am Kabelende schon entfernt und das Schirmgeflecht entweder abgeschnitten oder umgelegt ist. Zusätzlich muss das Rundkabel 10 in der richtigen Winkellage vorliegen, so dass die jeweiligen Führungen der Führungselemente 6 bis 9 die Kabeladern 11 aufnehmen können. Mittels einer (nicht dargestellten) beispielsweise optischen Erfassungseinrichtung wird überwacht, ob sich die Kabeladern in der richtigen Winkellage befinden. Mittels (eines nicht dargestellten) Kabelgreifers durch entsprechende Rotation kann das Rundkabel in die richtigen Winkellage gebracht werden.

Danach läuft das Verfahren zum Entfernen der Schirmfolie vom geschirmten Rundkabel 10 wie folgt ab: Der offene Messerkopf 29 fährt über das Rundkabel 10 zur gewünschten Schnittposition x, in der die Schirmfolie angeschnitten werden soll. Die beiden einander gegenüberliegenden Messerhalter 30, 31 sowie die ebenfalls einander gegenüberliegenden Messerhalter 32 schliessen auf einen in einer (nicht dargestellten) Prozessor einer Steuereinheit abgespeicherten Wert für die radiale Position der Messer in der Schliessstellung. Beim Schliessvorgang kann eventuell die Winkellage durch die Formelemente leicht korrigiert werden. Die Schirmfolie wird von den jeweiligen Formabschnitten der Formelemente an die Kabeladern 11 gedrückt, das Kabel wird komprimiert und gleichzeitig die Schirmfolie geschnitten oder eingeritzt bzw. angeschnitten. Das Ergebnis des Anschneidens ist neben den durch die Schneiden vorgegebenen geometrischen Verhältnissen auch davon abhängig, wie stark die Kabeladern von den Führungsplatten komprimiert werden. Diese Kompression kann mit den Antrieben des Messerkopfes programmierbar eingestellt werden. Die Steuerung ermöglicht es bei Bedarf auch, zuerst eine erste Schneidanordnung mit dem Messerpaar der paarweise zusammengefassten Messerhalter 30, 31 und danach die zweite Schneidanordnung mit dem weiteren Messerpaar der Messerhalter 32 zu schliessen (vgl. Fig. 9).

Nach Beendigung des Schneidevorgangs öffnen die Messerhalter 30, 31, 32 ganz und der Messerkopf 29 fährt etwas vor (vgl. Fig. 11), um die geschnittene oder angeschnittene Schirmfolie optimal fassen zu können. Die Abzugsbacken 34 werden pneumatisch ausgefahren, wobei sie in vollständig ausgefahrener Position die Schirmfolie noch nicht berühren. Danach werden die Messerhalter 30, 31 in Schliessrichtung bewegt, um die angeschnittene Schirmfolie zu klemmen. Zusätzlich oder allenfalls sogar alternativ zur Klemmung kann ein Vakuum durch die Abzugsbacken 34 auf die Schirmfolie aufgebracht werden, um das Abziehen effizient zu gestalten. Über durch Bohrungen geschaffene Ansaugkanäle 52 lässt sich die Schirmfolie ansaugen und so an den Abzugsbacken temporär fixieren. Der Messerkopf 29 fährt danach entlang der x-Achse zurück, wodurch die Schirmfolie abgetrennt wird, worauf das abgetrennte Schirmfolienstück in die Nähe des Absaugrohrs 36 gebracht wird, von dem es schliesslich abgesogen und so aus der Kabelbearbeitungseinrichtung 1 entfernt werden kann.

Die vorgängig beschriebenen Ausführungsbeispiele sind auf die Bearbeitung eines geschirmten, vieradrigen Rundkabels 10 in der Art des in Fig. 1 gezeigten Kabels gerichtet. Die erfindungsgemässe Kabelbearbeitungseinrichtung 1 eignet sich grundsätzlich auch für andere geschirmte, mehradrige Rundkabel. So können die Rundkabel mit oder ohne Füller und gegebenenfalls auch ohne Schirmgeflecht ausgestattet sein. Wenn das geschirmte Rundkabel zu Beispiel drei Kabeladern aufweist, dann würde die Kabelbearbeitungseinrichtung drei den Kabeladern jeweils zugeordnete Messer (sowie den Messern zugehörige Führungsplatten) aufweisen, die in der Konfiguration eines einer dreizackigen Sterns um das Kabel angeordnet wären. Auch für fünfadrige geschirmte Rundkabel oder geschirmte Rundkabel mit sogar einer höheren Aderzahl könnte die entsprechend angepasste Kabelbearbeitungseinrichtung vorteilhaft sein.

## Patentansprüche

1. Kabelbearbeitungseinrichtung zum Entfernen einer Schirmfolie (20) von einem geschirmten, mehradrigen Rundkabel (10), mit
- mehreren, zwischen einer Offenstellung und einer Schliessstellung radial gegen das Rundkabel bewegbaren Messern (2, 3, 4, 5) zum Anschneiden der Schirmfolie (20), wobei jeweils ein Messer (2, 3, 4, 5) einer Kabelader (11) des Rundkabel (10) zugeordnet ist und wobei die Messer (2, 3, 4, 5) konkav geformte Schneiden (23, 24, 25, 26) aufweisen, und
- Führungselementen (6, 7, 8, 9) mit Führungsabschnitten (27, 28), in die die von der Schirmfolie (20) umhüllten Kabeladern (11) in einer Schliessstellung wenigstens bereichsweise aufnehmbar sind,
wobei wenigstens ein Teil der Messer (2, 3, 4, 5) mit Führungselementen (6, 7, 8, 9) versehen sind, wobei das Messer (2, 3, 4, 5) das zugehörige Führungselement (6, 7, 8, 9) wenigstens in der Schliessstellung um einen Überstand (t) gegenüber dem Führungsabschnitt (27, 28) vorsteht.

2. Kabelbearbeitungseinrichtung nach Anspruch 1, **dadurch gekennzeichnet, dass** das Messer (2, 3, 4, 5) wenigstens in der Schliessstellung um einen zwischen 0.05 mm und 0.3 mm liegenden Überstand (t) gegenüber dem Führungsabschnitt (27, 28) des jeweiligen Führungselements (6, 7, 8, 9) vorsteht.

3. Kabelbearbeitungseinrichtung nach Anspruch 1 oder 2, **dadurch gekennzeichnet, dass** der Führungsabschnitt (27, 28) des Führungselements (6, 7, 8, 9) eine vorzugsweise kreiszylindrische konkave Anschlagfläche für die von der Schirmfolie (20) umhüllte Kabelader (11) bildet.

4. Kabelbearbeitungseinrichtung nach einem der Ansprüche 1 bis 3, **dadurch gekennzeichnet, dass** das Führungselement (6, 7, 8, 9) durch ein aus einer Metallplatte gefertigtes Bauteil gebildet ist.

5. Kabelbearbeitungseinrichtung nach einem der Ansprüche 1 bis 4, **dadurch gekennzeichnet, dass** jedes Messer (2, 3, 4, 5) ein Führungselement (6, 7, 8, 9) aufweist.

6. Kabelbearbeitungseinrichtung nach einem der Ansprüche 1 bis 4, **dadurch gekennzeichnet, dass** ein Teil der Messer (2, 3) Führungselemente (6, 7) aufweisen und die restlichen Messer (4, 5) frei liegende Schneiden (23, 24, 25, 26) aufweisen.

7. Kabelbearbeitungseinrichtung nach einem der Ansprüche 1 bis 6, **dadurch gekennzeichnet, dass** das Messer (2, 3, 4, 5) jeweils ein keilförmiges vorderes, dem Rundkabel zugewandtes Ende (41) aufweist, wobei die Schneide (23, 24, 25, 26) im Bereich der Keilspitze des Messer (2, 3, 4, 5) angeordnet ist.

8. Kabelbearbeitungseinrichtung nach einem der Ansprüche 1 bis 7, **dadurch gekennzeichnet, dass** ein Nutabschnitt (38) an die Schneide (23, 24, 25, 26) anschliesst.

9. Kabelbearbeitungseinrichtung nach einem der Ansprüche 1 bis 8, **dadurch gekennzeichnet, dass** seitlich an den Schneiden (23, 24, 25, 26) spitzwinklig zulaufende Spitzen (40) zum Perforieren der Schirmfolie (20) angeordnet sind.

10. Kabelbearbeitungseinrichtung zum Entfernen einer Schirmfolie (10) von einem geschirmten, vieradrigen Rundkabel (10) mit vier Kabeladern (11) nach einem der Ansprüche 1 bis 9, **dadurch gekennzeichnet, dass** vier Messer (2, 3, 4, 5) zum Anschneiden der Schirmfolie (20) vorgesehen sind.

11. Kabelbearbeitungseinrichtung nach einem der Ansprüche 1 bis 10, **dadurch gekennzeichnet, dass** die Kabelbearbeitungseinrichtung (1) einen Messerkopf (29) mit Messerhaltern (30, 31, 32) zum Halten der Messer (2, 3, 4, 5) aufweist.

12. Kabelbearbeitungseinrichtung nach Anspruch 11, **dadurch gekennzeichnet, dass** der Messerkopf (29) zwei einander gegenüberliegende Messerhalter (30, 31, 32) aufweist, die mit Abzugsbacken (34) zum Abziehen der angeschnittenen Schirmfolie (20) ausgerüstet sind.

13. Kabelbearbeitungseinrichtung nach einem der Ansprüche 1 bis 12, **dadurch gekennzeichnet, dass** die Kabelbearbeitungseinrichtung (1) ein Absaugrohr (36) zum Absaugen der abgezogenen Schirmfolie (20) aufweist.

14. Verfahren zum Entfernen einer Schirmfolie (20) von einem geschirmten, mehradrigen Rundkabel (10), unter Verwendung der Kabelbearbeitungseinrichtung (1) nach einem der Ansprüche 1 bis 13, wobei Messer (2, 3, 4, 5) radial gegen das Rundkabel bewegt werden, so dass die Schirmfolie (20) in einer Schliessstellung von den Messern (2, 3, 4, 5) angeschnitten wird, wobei wenigstens eines der Messer (2, 3, 4, 5) um einen Überstand (t) gegenüber einem Führungsabschnitt (27, 28) eines Führungselements (6, 7, 8, 9) vorsteht, so dass der Überstand (t) eine maximale Anschneidetiefe festlegt.

## Claims

1. A cable processing device for removing a screen film (20) from a shielded, multi-core round cable (10), comprising
- multiple knives (2, 3, 4, 5) that can be radially moved against the round cable between an open position and a closed position and serve for cutting the screen film (20), wherein one knife (2, 3, 4, 5) is respectively assigned to one cable core (11) of the round cable (10), and wherein the knives (2, 3, 4, 5) have concavely shaped cutting edges (23, 24, 25, 26), and
- guide elements (6, 7, 8, 9) with guide sections (27, 28), in which the cable cores (11) covered by the screen film (20) can be at least sectionally accommodated in a closed position,
wherein at least some of the knives (2, 3, 4, 5) are provided with guide elements (6, 7, 8, 9), and wherein the knife (2, 3, 4, 5) protrudes at least in the closed position over the associated guide element (6, 7, 8, 9) by a protrusion (t) referred to the guide section (27, 28).

2. The cable processing device according to claim 1, **characterized in that** the knife (2, 3, 4, 5) protrudes at least in the closed position over the guide section (27, 28) of the respective guide element (6, 7, 8, 9) by a protrusion (t) between 0.05 mm and 0.3 mm.

3. The cable processing device according to claim 1 or 2, **characterized in that** the guide section (27, 28) of the guide element (6, 7, 8, 9) forms a preferably circular-cylindrical, concave locating surface for the cable core (11) covered by the screen film (20).

4. The cable processing device according to one of claims 1 to 3, **characterized in that** the guide element (6, 7, 8, 9) is formed by a component made of a metal plate.

5. The cable processing device according to one of claims 1 to 4, **characterized in that** each knife (2, 3, 4, 5) has a guide element (6, 7, 8, 9).

6. The cable processing device according to one of claims 1 to 4, **characterized in that** some of the knives (2, 3) have guide elements (6, 7) and the remaining knives (4, 5) have exposed cutting edges (23, 24, 25, 26).

7. The cable processing device according to one of claims 1 to 6, **characterized in that** the knife (2, 3, 4, 5) respectively has a wedge-shaped front end (41) that faces the round cable, wherein the cutting edge (23, 24, 25, 26) is arranged in the region of the wedge tip of the knife (2, 3, 4, 5).

8. The cable processing device according to one of claims 1 to 7, **characterized in that** the cutting edge (23, 24, 25, 26) is followed by a groove section (38).

9. The cable processing device according to one of claims 1 to 8, **characterized in that** points (40) for perforating the screen film (20), which converge at an acute angle, are arranged laterally on the cutting edges (23, 24, 25, 26).

10. A cable processing device for removing a screen film (10) from a shielded, four-core round cable (10) with four cable cores (11) according to one of claims 1 to 9, **characterized in that** four knives (2, 3, 4, 5) are provided for cutting the screen film (20).

11. The cable processing device according to one of claims 1 to 10, **characterized in that** the cable processing device (1) has a knife head (29) with knife holders (30, 31, 32) for holding the knives (2, 3, 4, 5).

12. The cable processing device according to claim 11, **characterized in that** the knife head (29) has two knife holders (30, 31, 32), which lie opposite of one another and are equipped with stripping jaws (34) for stripping off the cut screen film (20).

13. The cable processing device according to one of claims 1 to 12, **characterized in that** the cable processing device (1) has a suction tube (36) for removing the stripped-off screen film (20) by suction.

14. A method for removing a screen film (20) from a shielded, multi-core round cable (10) by using a cable processing device (1) according to one of claims 1 to 13, wherein knives (2, 3, 4, 5) can be radially moved against the round cable such that the screen film (20) is cut by the knives (2, 3, 4, 5) in a closed position, and wherein at least one of the knives (2, 3, 4, 5) protrudes over a guide section (27, 28) of a guide element (6, 7, 8, 9) by a protrusion (t) such that the protrusion (t) defines a maximum cutting depth.

## Revendications

1. Dispositif d'usinage de câbles, destiné à retirer un film de blindage (20) d'un câble rond (10) multiconducteurs blindé, comprenant
- plusieurs lames (2, 3, 4, 5) déplaçables en direction radiale, entre une position ouverte et une position fermée contre le câble rond, pour entamer le film de blindage (20), chaque fois une lame (2, 3, 4, 5) étant associée à un conducteur de câble (11) du câble rond (10) et les lames (2, 3, 4, 5) comportant des arêtes (23, 24, 25, 26) façonnées de forme concave,
et
- des éléments de guidage (6, 7, 8, 9) pourvus de segments de guidage (27, 28), dans lesquels, dans une position fermée peuvent être réceptionnés au moins par endroits les conducteurs de câble (11) enveloppés par le film de blindage (20),
au moins une partie des lames (2, 3, 4, 5) étant munie d'éléments de guidage (6, 7, 8, 9), au moins dans la position fermée, la lame (2, 3, 4, 5) débordant de l'élément de guidage (6, 7, 8, 9) correspondant d'un surplomb (t) par rapport au segment de guidage (27, 28).

2. Dispositif d'usinage de câbles selon la revendication 1, **caractérisé en ce qu'**au moins dans la position fermée, la lame (2, 3, 4, 5) déborde d'un surplomb (t) compris entre 0.05 mm et 0.3 mm par rapport au segment de guidage (27, 28) de l'élément de guidage (6, 7, 8, 9) concerné.

3. Dispositif d'usinage de câbles selon la revendication 1 ou 2, **caractérisé en ce que** le segment de guidage (27, 28) de l'élément de guidage (6, 7, 8, 9) forme une surface de butée concave, de préférence cylindrique circulaire pour le conducteur de câble (11) enveloppé par le film de blindage (20).

4. Dispositif d'usinage de câbles selon l'une quelconque des revendications 1 à 3, **caractérisé en ce que** l'élément de guidage (6, 7, 8, 9) est formé d'un composant fabriqué à partir d'une plaque métallique.

5. Dispositif d'usinage de câbles selon l'une quelconque des revendications 1 à 4, **caractérisé en ce que** chaque lame (2, 3, 4, 5) comporte un élément de guidage (6, 7, 8, 9).

6. Dispositif d'usinage de câbles selon l'une quelconque des revendications 1 à 4, **caractérisé en ce qu'**une partie des lames (2, 3) comporte des éléments de guidage (6, 7) et les autres lames (4, 5) comportent des arêtes (23, 24, 25, 26) libres.

7. Dispositif d'usinage de câbles selon l'une quelconque des revendications 1 à 6, **caractérisé en ce que** la lame (2, 3, 4, 5) comporte respectivement une extrémité (41) antérieure cunéiforme qui fait face au câble rond, l'arête (23, 24, 25, 26) étant placée dans la zone de la pointe conique de la lame (2, 3, 4, 5).

8. Dispositif d'usinage de câbles selon l'une quelconque des revendications 1 à 7, **caractérisé en ce qu'**un segment de rainure (38) se raccorde sur l'arête (23, 24, 25, 26).

9. Dispositif d'usinage de câbles selon l'une quelconque des revendications 1 à 8, **caractérisé en ce que** latéralement sur les arêtes (23, 24, 25, 26) sont placées des pointes (40) en angle aigu, destinées à perforer le film de blindage (20).

10. Dispositif d'usinage de câbles, destiné à retirer un film de blindage (10) d'un câble rond (10) multiconducteurs blindé pourvu de quatre conducteurs de câble (11) selon l'une quelconque des revendications 1 à 9, **caractérisé en ce que** quatre lames (2, 3, 4, 5) sont prévues pour entamer le film de blindage (20).

11. Dispositif d'usinage de câbles selon l'une quelconque des revendications 1 à 10, **caractérisé en ce que** le dispositif d'usinage de câbles (1) comporte une tête de coupe (29) pourvue de porte-lames (30, 31, 32), destinés à maintenir les lames (2, 3, 4, 5).

12. Dispositif d'usinage de câbles selon la revendication 11, **caractérisé en ce que** la tête de coupe (29) comporte deux porte-lames (30, 31, 32) mutuellement opposés, qui sont équipés de mâchoires de retrait (34), destinées à retirer le film de blindage (20) entamé.

13. Dispositif d'usinage de câbles selon l'une quelconque des revendications 1 à 12, **caractérisé en ce que** le dispositif d'usinage de câbles (1) comporte un tube d'aspiration (36), destiné à aspirer le film de blindage (20) retiré.

14. Procédé, destiné à retirer un film de blindage (20) d'un câble rond (10) multiconducteurs blindé, en utilisant le dispositif d'usinage de câbles (1) selon l'une quelconque des revendications 1 à 13, des lames (2, 3, 4, 5) étant déplacées en direction radiale contre le câble rond, de sorte que dans une position fermée, le film de blindage (20) soit entamé par les lames (2, 3, 4, 5), au moins l'une des lames (2, 3, 4, 5) débordant d'un surplomb (t) par rapport à un segment de guidage (27, 28) d'un élément de guidage (6, 7, 8, 9), de sorte que le surplomb (t) fixe une profondeur maximale d'entame.
